# NEUE EUROPÄISCHE PATENTSCHRIFT

(11) **EP 0 267 401 B2**
(45) Veröffentlichungstag und Bekanntmachung des Hinweises auf die Entscheidung über den Einspruch: **22.04.1998**
(45) Hinweis auf die Patenterteilung: 09.09.1992
(21) Anmeldenummer: 87114073.7
(22) Anmeldetag: 26.09.1987
(51) Int. Cl.: H04N 5/45

(54) **Fernsehempfänger mit einem Ablenkoszillator, der gleichzeitig zur Steuerung von Zeilengeneratoren zur Einblendung von alphanumerischen und/oder graphischen Zeichen auf dem Bildschirm dient**
Television receiver with a deflection oscillator which is simultaneously used in driving character generators for blending alphanumeric and/or graphic characters onto the screen
Récepteur de télévision muni d'un oscillateur de déviation qui sert simultanément à la commande de générateurs de caractères et à des fins d'insertion de caractères alphanumériques et/ou graphiques sur écran

(30) Priorität: 11.10.1986 DE 3634698
(43) Veröffentlichungstag der Anmeldung: 18.05.1988
(73) Patentinhaber: Deutsche Thomson-Brandt GmbH, 78003 Villingen-Schwenningen (DE)
(72) Erfinder: Hartmann, Uwe, D-7730 Villingen-Schwenningen (DE); Mai, Udo, D-7730 Villingen-Schwenningen 23 (DE); Ohnemus, Fritz, D-7730 Villingen-Schwenningen (DE)

(56) Entgegenhaltungen:
- DE-B- 2 840 893
- DE-C- 3 331 007
- US-A- 3 812 285
- PATENT ABSTRACTS OF JAPAN, Band 8, Nr. 29 (E-226)[1466], 7. Februar 1984 & JP-A-58 190 180
- Valvo Handbuch 1980, Seiten 115 bis 119
- Valvo Handbuch 1986, Seiten 239 bis 245

## Beschreibung

Die Erfindung betrifft einen Fernsehempfänger mit einem Ablenkoszillator, der gleichzeitig zur Steuerung von Zeichengeneratoren zur Einblendung von alpha-numerischen und/oder graphischen Zeichen auf dem Bildschirm dient.

Für eine stabile Wiedergabe der Zeichen muß die Steuerung der Zeichengeneratoren synchron zur Ablenkung der Elektronenstrahlen erfolgen, wobei die Ablenkoszillatoren auf einer stabilen Frequenz schwingen müssen.

Aus der JP-A 58 190 180 ist bereits ein Empfänger bekannt, der in der Lage ist Zeichen darzustellen. In Abhängigkeit davon, ob ein Fernsehsignal empfangen wird oder nicht, werden zur Synchronisation von Ablenk- und Zeichengeneratoren entweder erste Synchronsignale (A) verwendet, die von Mitteln gebildet werden, die die Synchronsignale des Fernsehsignales aufbereiten, oder aber zweite Synchronsignale (B), die aus dem Ausgangssignal eines Oszillators abgeleitet sind.

Aus der DE-B-28 40 893 ist ferner ein Fernsehempfänger gemäß dem Oberbegriff des vorliegenden Anspruchs 1 bekannt. Hier liefert der betreffende Oszillator nur die Impulse für die Horizontalablenkung der Fernsehröhre, währen deren Vertikalablenkimpulse getrennt davon erzeugt werden. Außerdem ist dieser Ablenkschaltung der Fernsehröhre ein Umschalter vorgeschaltet, der bei Vorhandensein von Synchronimpulsen den dann phasenverriegelten Oszillator überbrückt und bei Nichtvorhandensein dieser Synchronimpulse den dann nicht phasenvorriegelten Oszillator mit der horizontalen Ablenkschaltung der Fernsehröhre in Verbindung bringt. Der genannte Oszillator dient in beiden Fällen zur Steuerung des Zeichengenerators, woraus ein relativ komplizierter Schaltungsaufbau resultiert.

Es ist die Aufgabe der vorliegenden Erfindung, bei einem Empfänger der genannten Art die Anzahl von Mitteln zu reduzieren.

Diese Aufgabe wird gelöst durch einen Fernsehempfänger nach Anspruch 1.

Der erfindungsgemäße Fernsehempfänger weist einen Empfängereingang auf, über den ein Fernsehsignal zuführbar ist, das üblicherweise Synchronimpulse enthält, die zur Synchronisation eines Oszillatorsignals dienen. Aus diesem wird ein gemeinsames Steuersignal für Ablenkgeneratoren für Elektronenstrahlen und einem Zeichengenerator abgeleitet.

Weiterhin sind Erkennungsmittel vorgesehen, die erkennen, ob Fernsehsignale vorhanden sind. Falls ja, dienen deren Synchronsignale zur Synchronisation des Oszillators. Falls nein, schalten die Erkennungsmittel den Oszillator derart, daß dessen Ausgangssignal nicht phasengekoppelt ist mit eventuell empfangenen Signalen.

Vorteilhafte Weiterbildungen des erfindungsgemäßen Fernsehempfängers werden durch die Unteransprüche gegeben.

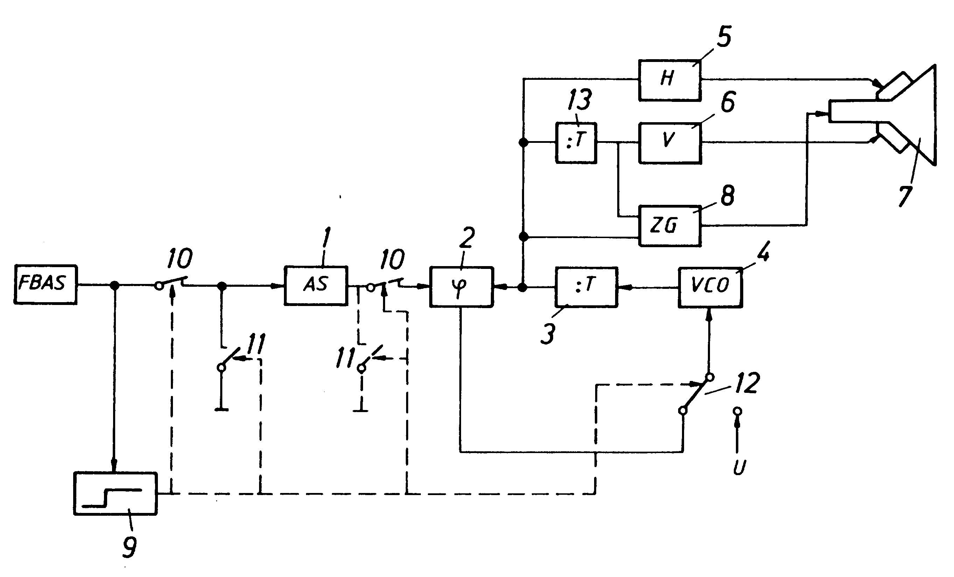

Nachstehend wird die Erfindung mit Hilfe der Zeichnung anhand eines Ausführungsbeispieles beschrieben.

Das Fernsehsignal FBAS ist an den Eingang eines Amplitudensiebs 1 geschaltet. Die vom Amplitudensieb 1 selektierten Synchronimpulse werden in einer Phasenvergleichstufe 2 mit der in einem Frequenzteiler 3 geteilten Frequenz aus dem Oszillator 4 des Ablenkgenerators verglichen. Der Phasenvergleich liefert für den Oszillator 4 eine Regelspannung in bekannter Weise. Die Oszillatorfrequenz dient zur Ansteuerung der Ablenkgeneratoren 5 und 6 über die Frequenzteiler 3 und 13 für die Elektronenstrahlen in einer Bildröhre 7 und zur Steuerung des Zeichengenerators 8. Der Zeichengenerator kann z.B. Teil eines Videotextdekoders, eines Bildschirmtextdekoders oder auch Teil eines an den Fernsehempfänger angeschlossenen Computers sein. Eine Sendererkennungsschaltung 9 wertet die Synchronsignale des Fernsehsignals aus. Sind diese nicht vorhanden, öffnet sie entweder den Kontakt 10 zur Sperrung des FBAS-Signals oder schließt den Kontakt 11, wodurch das FBAS-Signal am Eingang des Amplitudensiebs 1 kurzgeschlossen wird. Die Unterbrechung bzw. der Kurzschluß kann auch am Ausgang des Amplitudensiebes 1 vorgenommen werden. Dadurch liefert die Phasenvergleichsstufe 2 eine bestimmte feste Spannung für den Oszillator 4, so daß dieser stabil auf einer festen Frequenz schwingt. Die Sendererkennungsschaltung kann auch den Steuereingang des Oszillators durch Umschalten des Kontaktes 12 auf einen festen Spannungswert schalten. Die Sendererkennungsschaltung 9 wertet dabei allein die Synchronsignale des Sendersignals aus, ohne eine Koinzidenz mit den im Fernsehempfänger erzeugten Rücklaufimpulsen zu benötigen. Eine derartige Schaltung ist z.B. in der DE-A-35 08 527 beschrieben.

Die Erfindung bringt den Vorteil, daß für die gesamte Dauer des Fehlens eines Sendesignals der Oszillator 4 auf einer festen Frequenz eingestellt ist, sowohl während des Hin- als auch während des Rücklaufs der Elektronenstrahlen. Werden von der Sendererkennungsschaltung 9 Fernsehsignale erkannt, übernehmen die Synchronimpulse dieser Fernsehsignale wieder die Synchronisation. Dieses ist ein einmaliger Vorgang, so daß sich Störungen nicht mehr auswirken können. Die Erkennungsschaltung 9 kann z.B. in integrierter Form zusammen mit den anderen Stufen für die Steuerung der Zeichengeneratoren aufgebaut sein oder auch in diskreter Bauweise vorliegen. Ausser den genannten Maßnahmen zur Umschaltung des Oszillators 4 sind noch zahlreiche weitere denkbar.

## Patentansprüche

1. Fernsehempfänger, dem über einen Empfängereingang ein Fernsehsignal (FBAS) zuführbar ist, mit einer Sendererkennungsschaltung (9), die das Vorhandensein von Synchronimpulsen des Fernsehsignales (FBAS) erkennt, Ablenkgeneratoren (5, 6) zur Ablenkung von Elektronenstrahlen einer Bildröhre (7), einem Zeichengenerator (8) zur Einblendung von alpha-numerischen und/oder graphischen Zeichen, wobei sowohl für den Betrieb des Fernsehempfängers mit Fernsehsignalen als auch für den Betrieb mit alpha-numerischen und/oder graphischen Zeichen die Ablenkgeneratoren (5, 6) und der Zeichengenerator (8) durch Steuersignale angesteuert sind, und mit einem zur Ablenkgeneratorsteuerung dienenden Oszillator (4), wobei die Sendererkennungsschaltung (9) bewirkt, daß bei Vorhandensein von Synchronimpulsen das Ausgangssignal des Oszillators (4) mittels einer Phasenvergleichsstufe (2) durch die Synchronimpulse synchronisiert wird, und daß bei Nichterkennen von Synchronimpulsen der Phasenvergleichsstufe (2) keine vom Empfängereingang empfangenen Signale zugeführt werden, wodurch das Ausgangssignal des Oszillators (4) mit einer festen Frequenz schwingt, dadurch gekennzeichnet, daß zur Austeuerung mittels eines gemeinsamen Steuersignales der Oszillator (4) steuersignalmäßig nicht nur mit dem Zeichengenerator (8) und dem Horizontalablenkgenerator (5), sondern auch mit dem Vertikalablenkgenerator (6) fest verbunden ist, und zwar sowohl bei Vorhandensein als auch bei Nichtvorhandensein der Synchronimpulse, sodaß die genannte steuermäßige Verbindung für beide Fälle erhalten bleibt.

2. Fernsehempfänger nach Anspruch 1, dadurch gekennzeichnet, daß die Sendererkennungsschaltung (9) bei fehlenden Synchronimpulsen des Fernsehsignales (FBAS) den Ausgang eines die Synchronimpulse liefernden Amplitudensiebes (1) sperrt oder kurzschließt.

3. Fernsehempfänger nach Anspruch 1, dadurch gekennzeichnet, daß die Sendererkennungsschaltung (9) bei fehlenden Synchronimpulsen des Fernsehsignales (FBAS) den Eingang eines die Synchronimpulse liefernden Amplitudensiebes (1) sperrt oder kurzschließt.

## Claims

1. Television receiver to which a television signal (FBAS) can be supplied via a receiver input including a transmitter recognition circuit (9) recognising the presence of synchronising pulses of the television signal (FBAS), deflection generators (5, 6) for deflecting electron beams of a picture tube (7), a character generator (8) for inserting alphanumeric and/or graphic characters, wherein both for operation of the television receiver with television signals and for the operation with alphanumeric and/or graphic characters said deflection generators (5, 6) and said character generator (8) are controlled by control signals, further including an oscillator (4) serving for controlling said deflection generators, and wherein said transmitter recognition circuit (9) effects that in the presence of synchronising pulses the output signal of said oscillator (4) is synchronised by the synchronising pulses by means of a phase comparison stage (2) and that when synchronising pulses are not recognised signals received from the receiver input are not supplied to the phase comparison stage (2) such that the output of said oscillator (4) oscillates on a fixed frequency,
characterised in that
for purpose of a control by a common control signal said oscillator (4) is firmly connected with respect to the control signal not only to said character generator (8) and to the horizontal deflection generator (5) but also to the vertical deflection generator (6), namely both in the presence and in the absence of the synchronising pulses so that said connection with respect to the control is maintained in both cases.

2. Television receiver in accordance with claim 1
characterised in that said transmitter recognition circuit (9) in case of missing synchronising pulses of the television signal (FBAS) does interrupt or short-circuit the output of an amplitude discriminator (1) providing the synchronising pulses.

3. Television receiver in accordance with claim 1
characterised in that said transmitter recognition circuit (9) in case of missing synchronising pulses of the television signal (FBAS) does interupt or short-cicuit the input of an amplitude discriminator (1) providing the synchronising pulses.

## Revendications

1. Récepteur de télévision auquel un signal de télévision (signal composé de chrominance) peut être amené par une entrée du récepteur avec
un circuit de reconnaissance d'émetteurs (9), qui reconnaît l'existence d'impulsions de synchronisation du signal de télévision (signal composé de chrominance),
des générateurs de balayage (5, 6) pour le balayage de faisceaux d'électrons d'un tube image (7),
un générateur de caractères (8) pour la surimpression de caractères alphanumériques et/ou graphiques,
où aussi bien pour le fonctionnement du récepteur de télévision avec des signaux de télévision que pour le fonctionnement avec des caractères alphanumériques et/ou graphiques, les générateurs de balayage (5, 6) et le générateur de caractères (8) sont excités par des signaux de commande,
et avec un oscillateur (4) servant pour la commande des générateurs de balayage,
le circuit de reconnaissance d'émetteurs (9) ayant pour effet
qu'en présence d'impulsions de synchronisation, le signal de sortie de l'oscillateur (4) est synchronisé par les impulsions de synchronisation au moyen d'un étage de comparaison de phases (2) et
que lorsqu'il n'y a pas reconnaissance d'impulsions de synchronisation de l'étage de comparaison de phase (2) aucun signal reçu par l'entrée du récepteur n'est transmis, ce par quoi le signal de sortie de l'oscillateur (4) oscille avec une fréquence fixe, **caractérisé en ce** que pour l'excitation au moyen d'un signal de commande commun, l'oscillateur (4) est relié fixement, relativement au signal de commande, non seulement avec le générateur de caractères (8) et le générateur de balayage horizontal (5), mais aussi avec le générateur de balayage vertical (6), et ce aussi bien en la présence qu'en l'absence des impulsions de synchronisation, de sorte que la liaison citée relative à la commande est maintenue pour les deux cas.

2. Récepteur de télévision selon la revendication 1, **caractérisé en ce que** le circuit de reconnaissance d'émetteurs (9) bloque ou court-circuite la sortie d'un séparateur de synchronisation (1) fournissant les impulsions de synchronisation lorsque les impulsions de synchronisation du signal de télévision (signal composé de chrominance) manquent.

3. Récepteur de télévision selon la revendication 1, **caractérisé en ce que** le circuit de reconnaissance d'émetteurs (9) bloque ou court-circuite l'entrée d'un séparateur de synchronisation (1) fournissant les impulsions de synchronisation lorsque les impulsions de synchronisation du signal de télévision (signal composé de chrominance) manquent.
